# EUROPÄISCHE PATENTSCHRIFT

(11) **EP 3 613 116 B1**
(45) Veröffentlichungstag und Bekanntmachung des Hinweises auf die Patenterteilung: **16.06.2021**
(21) Anmeldenummer: 17719529.4
(22) Anmeldetag: 18.04.2017
(51) Int. Cl.: H02G 3/12, H02G 3/20

(54) **INSTALLATIONSVORRICHTUNG MIT EINEM DÜBEL UND EINER DARIN EINDREHBAREN HALTERUNG FÜR DEN EINBAU VON UNTERPUTZGERÄTEN**
INSTALLATION DEVICE WITH A WALL PLUG AND A HOLDER WHICH CAN BE SCREWED INTO IT FOR THE INSTALLATION OF FLUSH-MOUNTED DEVICES
DISPOSITIF D'INSTALLATION AVEC UNE CHEVILLE ET UN SUPPORT POUVANT ÊTRE VISSÉ LA DEDANS POUR L'INSTALLATION DES APPAREILS À MONTAGE ENCASTRÉ

(43) Veröffentlichungstag der Anmeldung: 26.02.2020
(73) Patentinhaber: Oblamatik AG, 7000 Chur (CH)
(72) Erfinder: OBRIST, Roland, 7412 Scharans (CH); KNUPFER, Daniel, 7203 Trimmis (CH)
(74) Vertreter: Troesch Scheidegger Werner AG
(86) Internationale Anmeldenummer: PCT/EP2017/059173
(87) Internationale Veröffentlichungsnummer: WO 2018/192638

(56) Entgegenhaltungen:
- WO-A1-03/081054
- WO-A1-2015/118241
- DE-A1- 4 427 769

## Beschreibung

### TECHNISCHES GEBIET

Die vorliegende Erfindung betrifft eine Installationsvorrichtung für den Einbau von Unterputzgeräten.

### STAND DER TECHNIK

Bei der Elektro-Unterputz-Installation werden für den Einbau von Unterputzgeräten wie UP-Steckdosen, UP-Schalter, UP-Bedieneinheiten oder auch UP-Telefondosen, UP-Antennendosen, UP-Dimmer, UP-Thermostate und viele mehr, sogenannte Schalterdosen verwendet. Schalterdosen gibt es in verschiedenen Ausführungen, wobei die einfachste Form becherförmig ist und einen über die Dosentiefe konstanten Durchmesser aufweist. Schalterdosen sind üblicherweise aus Kunststoff und haben Schraubdome, an welchen ein Geräteeinsatz befestigt werden kann.

Solche Schalterdosen brauchen viel Platz und bedingen eine aufwändige Installation. Zudem müssen unterschiedliche Dosen bei der Installation an unterschiedlichen Wandtypen verwendet werden, wie beispielsweise bei Massivwänden (z.B. mit verputzten oder mit Platten belegten Oberflächen) oder bei Hohlwänden (z.B. Gips- oder Leichtbauwänden). Bei der Fertigmontage wird eine Halte- oder Befestigungsplatte mit kleinen Schrauben an der UP-Dose angebracht, an der eine Abdeckplatte und/oder Rosette angebracht wird.

Die WO 03/081054 A1 offenbart eine Expansionseinheit, die aus zwei koaxial angeordneten Elementen besteht, welche gemeinsam in eine Öffnung einführbar sind, wobei das äussere Element durch Aufbringen einer axialen Last des Elements expandiert wird und die Expansion durch Einsetzen des inneren Koaxialelements verriegelt wird, wobei entsprechende Eingriffsmittel, die an der Innen- bwz. Aussenseite der Koaxialelemente vorgesehen sind, die Expansionseinheit in der Öffnung einrasten und verriegeln.

DE 44 27 769 A1 offenbart einen Dübel für den Einbau von Unterputzgeräten mit einer Verspanneinrichtung mit Zugring und Spannschrauben.

WO 2015/118241 A1 offenbart eine alternative Lösung für eine einfache Montage einer Installationsvorrichtung.

### BESCHREIBUNG DER ERFINDUNG

Eine Aufgabe der vorliegenden Erfindung besteht darin, eine platzsparende und einfach zu montierende Installationsvorrichtung für den Einbau von Unterputzgeräten bereitzustellen.

Diese Aufgabe wird durch eine Vorrichtung mit den Merkmalen des Anspruchs 1 gelöst. Weitere Ausführungsformen der Installationsvorrichtung, eines Installationssystems, sowie ein Installationsverfahren sind durch die Merkmale von weiteren Ansprüchen definiert.

Eine erfindungsgemässe Installationsvorrichtung für den Einbau von Unterputzgeräten an/in einer Wand weist einen Dübel und eine darin eindrehbare Halterung auf.

Der Dübel weist einen sich entlang einer ersten Längsachse erstreckenden hülsenförmigen Körper mit einem ersten freien Ende, einem diesem gegenüber angeordneten, zweiten freien Ende und einem dazwischenliegenden Fixierabschnitt auf. Am ersten freien Ende des Dübels ist ein erster stirnseitiger Anschlag vorgesehen und am zweiten freien Ende des Dübels ist ein erstes Verspannelement vorgesehen.

Die Halterung weist einen sich entlang einer zweiten Längsachse erstreckenden hülsenförmigen Körper mit einem ersten freien Ende und einem diesem gegenüber angeordneten, zweiten freien Ende auf. Am ersten freien Ende ist ein gegen das zweite freie Ende gerichteter zweiter Anschlag vorgesehen und am zweiten freien Ende ein zweites Verspannelement vorgesehen. Der erste Anschlag und der zweite Anschlag bilden ein Anschlagspaar.

Das erste Verspannelement und das zweite Verspannelement bilden ein Verspannpaar.

Der Fixierabschnitt ist derart ausgestaltet, dass eine relative Drehbewegung zwischen dem Dübel und der Halterung in einer ersten Drehrichtung zu einer Reduktion des Abstandes zwischen dem ersten freien Ende und dem zweiten freien Ende des Dübels führt und dass eine relative Drehbewegung zwischen dem Dübel und der Halterung in einer zur ersten Drehrichtung entgegengesetzter, zweiten Drehrichtung zu einer Vergrösserung des Abstandes zwischen dem ersten freien Ende und dem zweiten freien Ende des Dübels führt.

In dieser Schrift umfasst der Begriff freies Ende nicht nur die Endfläche des jeweiligen Körpers, sondern auch einen an die Endfläche benachbarten Bereich.

Die Halterung kann gleichzeitig auch als Befestigung, Abdeckung, Rosette oder Abdichtung dienen. Die Halterung kann ebenfalls als Unterputzdose für ein Unterputzgerät dienen. Weite kann an der Halterung ein Leerrohr befestigt werden.

Die erfindungsgemässe Installationsvorrichtung hat den Vorteil, dass sie eine kompakte und zuverlässig dichtende Installation ermöglicht, welche wenige, einfach herzustellende Einzelteile aufweist. Durch das Aufspreizen des Fixierabschnitts ist eine präzise Ausführung der Ausnehmung, beispielsweise eines Bohrloches in der Wand, in welches die Vorrichtung einzusetzen ist, nicht zwingend notwendig. Die Vorrichtung kann somit auch in Ausnehmungen installiert werden, welche grösser sind als der Aussendurchmesser des Dübels, da ein Verklemmen des Dübels mit der Halterung auch dann gewährleistet ist. Somit können für unterschiedliche Wandtypen, wie Massivwände oder Hohlwände, die gleichen Installationsvorrichtungen verwendet werden. Das einfache Prinzip ist für unterschiedlichste Grössen von Unterputzgeräten einsetzbar.

Eine solche Installationsvorrichtung kann nicht nur an Wänden angebracht werden, sondern ist auch an Decken oder Böden in gleicher Art und Weise anbringbar. Bei den Wänden muss es sich nicht unbedingt um diejenigen eines Gebäudes handeln. Die Anbringung an Wänden, Decken oder Böden von Fahrzeugen, wie Cars, Busse oder Züge, Schiffen oder Flugzeugen, Einrichtungen oder Mobiliar ist ebenfalls möglich. Durch die hervorragenden Dichteigenschaften lässt sich die Vorrichtung auch im Sanitärbereich einsetzen, beispielsweise an den Wänden von Duschsäulen oder Badewannen.

Mit der erfindungsgemässen Vorrichtung kann auf eine Befestigungsplatte und auf die kleinen Schrauben verzichtet werden, welche zur Befestigung der Platte nötig sind. Auf die Anordnung einer Abdeckplatte oder Rosette kann ebenfalls verzichtet werden.

In einer Ausführungsform weisen der Dübel und/oder die Halterung einen zylindrischen hülsenförmigen Körper auf. Diese Ausgestaltung ist eine einfach herzustellen und eignet sich für die Installation in Bohrungen. Alternativ können Dübel und/oder Halterung einen ovalen, elliptischen oder mehrkantigen hülsenförmigen Körper aufweisen.

Querschnitte, welche nicht kreisförmig sind, neigen weniger zum Mitdrehen und bieten daher einen Verdrehschutz.

In einer weiteren Ausführungsform ist die Aussenkontur des zweiten freien Endes der Halterung kleiner ausgebildet als die Innenkontur des ersten freien Endes und des Fixierabschnitts des Dübels. D.h. der Aussendurchmesser auf der dem Dübel zugewandten Seite der Halterung ist kleiner als der Innendurchmesser auf der der Halterung zugewandten Seite des Dübels und als der Innendurchmesser des Fixierabschnitts. Somit kann die Halterung leicht in den Dübel eingeführt werden, bis das Verspannelement der Halterung am Verspannelement des Dübels anschlägt. Durch Drehen der Halterung im Dübel können dann die beiden Verspannelemente miteinander gekoppelt werden. Der Dübel und die Halterung können derart aufeinander abgestimmt sein, dass die Halterung mehrmals im Dübel gedreht werden kann, bevor sich der Fixierabschnitt zu deformieren beginnt.

In einer Ausführungsform weist der erste Anschlag des Dübels einen bezüglich der ersten Längsachse nach aussen gerichteten Flansch auf. Der Flansch ist ein durchgehender Flansch, welcher sich entlang des gesamten Umfangs bzw. Durchmessers des Dübels erstreckt. Der Flansch kann auch mehrere unterbrochene Abschnitte aufweisen. Alternativ können einzelne, nach aussen gerichtete Element am Umfang des Dübels angeordnet sein. Der Flansch, die Flanschabschnitte oder die einzelnen Elemente vergrössern die Anschlagsfläche auf beiden Seiten des Flansches bezüglich der Längsachse. D.h. die Anschlagsfläche gegenüber der Wand vergrössert sich und die Anschlagsfläche gegenüber der Halterung vergrössert sich. Ein grösserer Flansch verhindert, dass der Dübel ungehindert in die Wandbohrung hineingedrückt werden kann, wenn die Bohrung grösser als der Dübel ist.

In einer weiteren Ausführungsform sind anschliessend an das erste freie Ende des Dübels Rippen angeordnet, welche sich entlang der ersten Längsachse und/oder quer zur ersten Längsachse und/oder einer von diesen abweichenden Richtungen erstrecken. Rippen erhöhen den Halt des Dübels in der Bohrung und reduzieren oder verhindern ein Durchdrehen des Dübels in der Bohrung. Es können mehrere, in der Längsrichtung nebeneinander angeordnete Rippen vorgesehen sein oder es können einige wenige Rippen vorhanden sein. Der Aussendurchmesser der Rippen kann kleiner, gleichgross oder grösser als der Aussendurchmesser des Flansches des Dübels sein. Beispielsweise können mehrere Rippen mit kleinerem Durchmesser oder zwei Rippen mit gleichgrossem oder leicht grösserem Durchmesser vorgesehen sein.

In einer weiteren Ausführungsform sind im Fixierabschnitt des Dübels Ausnehmungen vorgesehen, welche sich entlang der ersten Längsachse und/oder quer zur ersten Längsachse und/oder einer von diesen abweichenden Richtungen erstrecken und welche am Umfang des Dübels verteilt sind. Die Ausnehmungen bewirken eine Reduktion der Steifigkeit des Dübels im Bereich des Fixierabschnitts, wodurch sich dieser leichter deformieren lässt. Es braucht also weniger Kraft, um den Fixierabschnitt zu deformieren, d.h. um ihn aus seiner ursprünglichen Lage auszulenken. Beispielsweise können drei, vier, fünf, sechs oder mehr solcher Ausnehmungen vorgesehen sein, welche gleichmässig am Umfang des Dübels verteilt sind. Grundsätzlich können beliebig ausgestaltete und angeordnete Ausnehmungen vorgesehen werden, da sie immer zu einer Reduktion der Steifigkeit des Dübels in dem Bereich der Ausnehmungen führen.

In einer Ausführungsform ist im Fixierabschnitt des Dübels mindestens eine Soll-Knickstelle mit einer lokalen Auswölbung und/oder einer lokalen Materialausdünnung und/oder einem anderen Material vorgesehen. Durch die Soll-Knickstelle kann festgelegt werden, an welcher Stelle des Dübels sich dieser deformiert. Die Soll-Knickstelle kann sich in der Mitte des Fixierabschnittes oder dazu benachbart befinden. Mit nur einer Soll-Knickstelle kann erreicht werden, dass der Dübel sich vornehmlich an einer Stelle bezüglich seiner Längsachse deformiert, d.h. aufspreizt. Dies ist für die Installation an Hohlwänden vorteilhaft. Bei mehreren Soll-Knickstellen kann eine gleichmässigere Deformation des Dübels bezüglich seiner Längsachse erreicht werden. Dies ist für die Installation an Massivwänden vorteilhaft. Weist die Soll-Knickstelle ein anderes, schwächeres Material als der restliche Dübel auf, so kann es sich dabei um ein Material des gleichen Typs oder um ein andersartiges Material handeln. Üblicherweise sind die Dübel vollständig aus Kunststoff gefertigt, beispielsweise aus Polyamid. Kunststoffdübel werden im Spritzgussverfahren hergestellt, was ein Verspritzen von Kunststoffen mit unterschiedlichen Eigenschaften erlaubt. Alternativ können die Dübel aus Metall, wie Stahl, Messing oder dergleichen gefertigt sein. Die Dübel können auch aus einem Verbundmaterial bestehen. Selbstverständlich können diese Materialien auch miteinander kombiniert werden. Beispielsweise kann ein Metalldübel eine Kunststoff- oder Gummi-Ummantelung aufweisen. Durch den erhöhten Reibungswert des Gummis, verdreht sich der Dübel weniger im Bohrloch, da die Reibung zwischen der Wand und dem Dübel grösser ist als die Reibung zwischen dem Dübel und der Halterung. Der Dübel kann an seinem gegen die Halterung berichteten Ende und/oder in diesem End nahen Bereich am äusseren Umfang mit Rippen oder einer Beschichtung versehen sein, welche die lokalen Reibwerte erhöhen. Der äussere Umfang des Fixierabschnitts und des Bereichs der Verspannelemente weisen geringere Reibwerte auf. Die Reibung zwischen dem Dübel und der Halterung kann bei den Verspannelementen absichtlich zu einem gewissen Grad erhöht werden, damit sich der Dübel beim Eindrehen der Halterung leicht verdreht und dadurch zu einer erhöhten Verklemmung führt.

In einer weiteren Ausführungsform weist der zweite Anschlag der Halterung einen bezüglich der zweiten Längsachse nach aussen gerichteten Flansch auf. Je grösser der Flansch ist, desto Grösser wird die Kontaktfläche mit der Wand. Ein grösserer Flansch kann auch eine grössere Bohrung abdecken.

In einer weiteren Ausführungsform ist im Flansch der Halterung, auf seiner gegen das zweite freie Ende gerichteten Seite, eine Nut für eine Dichtung vorgesehen. Üblicherweise werden Kunststoffdichtungen, beispielsweise Flachdichtungen aus geschäumtem Gummi verwendet, um das Eindringen von Feuchtigkeit zu verhindern. Es lassen sich jedoch auch andere handelsübliche Dichtungen zusammen mit der Vorrichtung verwenden. Bei einer Spritzgusshergestellten Halterung aus Kunststoff, kann die Dichtung zusammen mit der Halterung auf diese aufgespritzt sein. Die im Flansch umlaufende Dichtung ermöglicht eine nahtlose Rundumdichtung zwischen dem Flansch und der Wand. Die Installationsvorrichtung kann daher auch sicher in Nassräumen eingesetzt werden.

In einer Ausführungsform ist am ersten freien Ende der Halterung eine Befestigung für ein Unterputzgerät vorgesehen. Beispielsweise kann dies ein Gewinde, ein Bajonettverschluss oder eine Steckverbindung mit einem Rastelement sein. Dies erlaubt eine vielfältige Anordnung von unterschiedlichsten Unterputzgeräten.

In einer weiteren Ausführungsform bildet das Verspannpaar eine Gewindeverbindung oder eine Bajonettverschluss-Verbindung. Eine Gewindeverbindung erlaubt ein stufenloses Anziehen der Installationsvorrichtung bzw. ein stufenloses Deformieren des Fixierabschnitts. Dies ist bei sich ändernden und unvorhersehbaren Installationsbedingungen vorteilhaft. Das Aussengewinde der Halterung kann sich nur über einen Randbereich des zweiten freien Endes erstrecken. Alternativ kann es sich bis zur Hälfte, bis zu ZweiDrittel, bis zu Drei-Viertel oder darüber hinaus bis maximal zum Flansch erstrecken. Der Bereich des Gewindes der Halterung ist länger als der Bereich des Gewindes des Dübels. Das Innengewinde des Dübels sollte sich grundsätzlich über mindestens zwei Mal die Gewindesteigung erstrecken, damit das Gewinde beim Anziehen der Halterung im Dübel nicht ausreisst. Drei, vier, fünf oder mehr Mal die Gewindesteigung ist jedoch auch möglich.

Ein Bajonettverschluss erleichtert die Montage bei gleichbleibenden und vorhersehbaren Installationsbedingungen. So kann bei einer Leichtbauwand die gewünschte Klemmkraft durch die Ausgestaltung des Bajonettverschlusses festgelegt werden. Es ist dann nicht möglich die Installationsvorrichtung zu fest anzuziehen und dadurch die Wand zu beschädigen.

Um den Gewindebereich des Dübels zu verstärken, kann in diesem Bereich der Dübel dicker ausgestaltet sein oder mit einem festeren Material versehen sein. Beispielsweise mit einem festeren Kunststoff oder einem Metallring, in welchem das Gewinde geschnitten ist. Bei einem Metallring sind weniger Gewindegänge nötig, damit das Gewinde beim Anziehen nicht ausreist. Dies erlaubt eine geringere Bautiefe des Dübels.

Auf der Aussenseite des Dübels können Rückhalteelemente vorgesehen sein, beispielsweise in der Form von abstehenden Lamellen, welche verhindern, dass der Dübel aus der Wandausnehmung rutscht. Zusätzlich vergrössern die abstehenden Lamellen den Kontaktbereich mit der Wandinnenseite, beispielsweise bei einer Hohlwand und ermöglicht das Übertragen von grösseren Haltekräften auf die Mauerinnenseite, ohne die Wand lokal zusätzlich zu belasten. Anstelle von einzelnen Lamellen, kann das Rückhalteelement auch ein durchgehend umlaufender Kragen sein. Die Ausgestaltung des Rückhalteelements sollte so gewählt werden, dass es sich beim Einschieben des Dübels in die Wandausnehmung an den Dübel anlegt und beim Herausziehen von diesem abspreizt und mit der umgebenden Wand verkeilt.

In einer Ausführungsform ist am zweiten freien Ende der Halterung ein bezüglich der zweiten Längsachse nach innen gerichteter Flansch mit einer Ausnehmung in der Form eines Innensechskants vorgesehen. Dadurch ist es nicht nötig an der Halterung etwas vorzusehen, was das Anziehen der Halterung im Dübel ermöglicht. Somit kann der nach der Montage sichtbare Teil der Halterung beliebig ausgestaltet werden, ohne Rücksicht auf irgendwelche Anzugselemente nehmen zu müssen. Der Innensechskant erlaubt die Verwendung eines möglichst grossen Werkzeuges, was das Anziehen erleichtert und ein Ausleihern oder Zerstören der Kontur verhindert oder reduziert. Eine grössere Durchgangsöffnung in der Halterung erleichtert zusätzlich die Durchführung von Kabel. Der Einsatz von anderen Formen, wie beispielsweise Dreikant, Vierkant oder Torks ist ebenfalls möglich. Alternativ kann die Halterung stirnseitig Ausnehmungen aufweisen. In diese Ausnehmungen kann ein Werkzeug eingreifen mittels welchem die Halterung in den Dübel eingedreht werde kann. Anstelle von Ausnehmungen kann die Halterung auch stirnseitig angeordnete Erhebungen aufweisen. In einer weiteren Alternative können im Innern der Halterung Strukturen vorgesehen sein, d.h. Ausnehmungen, Erhebungen oder eine Kombination davon, in welche ein Werkzeug eingreifen kann. Die Ausnehmungen oder Erhebungen können regelmässig oder beliebig am Umfang verteilt angeordnet sein. Alle stirnseitig oder innenliegenden Strukturen sind möglich, welche das Einführen eines Werkzeuges in der Richtung der Längsachse 20 erlauben.

Die erwähnten Ausführungsformen der Installationsvorrichtung lassen sich in beliebiger Kombination einsetzen, sofern sie sich nicht widersprechen.

Ein erfindungsgemässes Installationssystem weist eine zuvor beschriebene Installationsvorrichtung und ein darin angeordnetes Unterputzgerät auf. Üblicherweise werden die Unterputzgeräte in der Halterung angeordnet und die Halterung überragt seitlich die Geräte. Es ist jedoch auch möglich Geräte in der Halterung anzuordnen, welche die Halterung seitlich überragen. Es ist auch möglich Geräte mit Dichtungen zu verwenden, wobei die Gerätedichtung auch gegen die Wand dichtet, an welcher das System installiert ist. Durch eine solche Ausgestaltung kann eine Doppeldichtung zwischen der Umgebung und der Wandausnehmung erreicht werden, was die Sicherheit gegen das Eindringen von Feuchtigkeit erhöht. Alternativ kann die Dichtung in der Halterung weggelassen werden, um die Kosten für die Herstellung der Nut und die Kosten der Dichtung zu sparen.

Ein erfindungsgemässes Installationsverfahren einer erfindungsgemässen Installationsvorrichtung an einer Wand weist folgende Schritte auf:
- Das Einführen des Dübels in eine Ausnehmung in einer Wand;
- Das Einsetzen der Halterung in den Dübel, vor oder nach der Einführung des Dübels in die Ausnehmung in der Wand; und
- Das Ausführen einer relativen Drehbewegung der Halterung bezüglich des Dübels, was zu einer Reduktion des Abstandes zwischen dem ersten freien Ende und dem zweiten freien Ende des Dübels führt.

Das Einsetzen der Halterung in den Dübel kann das Einschieben oder das Einschieben und das teilweise Eindrehen der Halterung im Dübel umfassen.

### KURZE BESCHREIBUNG DER FIGUREN

Ausführungsbeispiele der vorliegenden Erfindung werden nachstehend anhand von Figuren noch näher erläutert. Diese dienen lediglich zur Erläuterung und sind nicht einschränkend auszulegen. Es zeigen
Fig. 1 eine perspektivische Explosionsansicht eines erfindungsgemässen Installationssystems für ein Unterputzgerät;
Fig. 2 eine perspektivische Ansicht einer Halterung einer erfindungsgemässen Installationsvorrichtung;
Fig. 3 eine perspektivische Ansicht eines Dübels einer erfindungsgemässen Installationsvorrichtung;
Fig. 4 eine seitliche Schnittansicht der Halterung der Figur 2 mit einer Dichtung;
Fig. 5 eine seitliche Schnittansicht des Dübels der Figur 3 eingesetzt in eine Wand;
Fig. 6 eine seitliche Schnittansicht eines erfindungsgemässen Installationssystems im zusammengebauten Zustand mit einem Leerrohr;
Fig. 7 eine Detailansicht der Soll-Knickstelle der Figur 6;
Fig. 8 eine Detailansicht des Rückhalteelements der Figur 6;
Fig. 9 eine perspektivische Ansicht einer weiteren Ausführungsform einer Halterung;
Fig. 10 eine perspektivische Teilschnittansicht einer weiteren Ausführungsform einer Halterung;
Fig. 11 eine seitliche Schnittansicht des Dübels der Figur 6;
Fig. 12 eine seitliche Schnittansicht einer weiteren Ausführungsform eines Dübels; und
Fig. 13 eine Draufsicht des Dübels der Figur 12.

### DETAILLIERTE BESCHREIBUNG DER ERFINDUNG

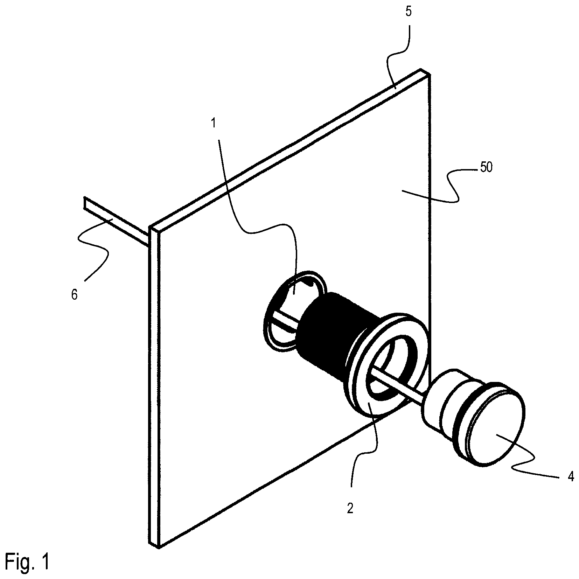

Die Figur 1 zeigt eine perspektivische Explosionsansicht eines erfindungsgemässen Installationssystems für ein Unterputzgerät 4 an einer Wand 5. Ein Dübel 1 ist in der Wand 5 soweit eingeführt, dass er im Wesentlichen bündig mit der Wandoberfläche 50 angeordnet ist. Eine Halterung 2 kann konzentrisch zum Dübel 1 in diesem angeordnet werden. Ein Unterputzgerät 4 kann konzentrisch zur Halterung 2 in dieser angeordnet werden. Strom- oder Steuerungskabel 6 sind durch den Dübel 1 und die Halterung 2 zum Unterputzgerät 4 führbar und mit diesem elektrisch verbindbar.

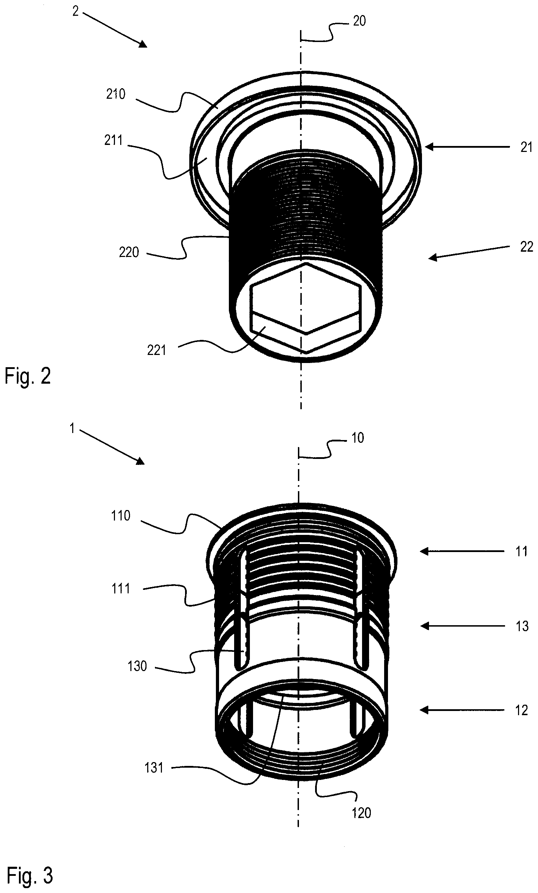

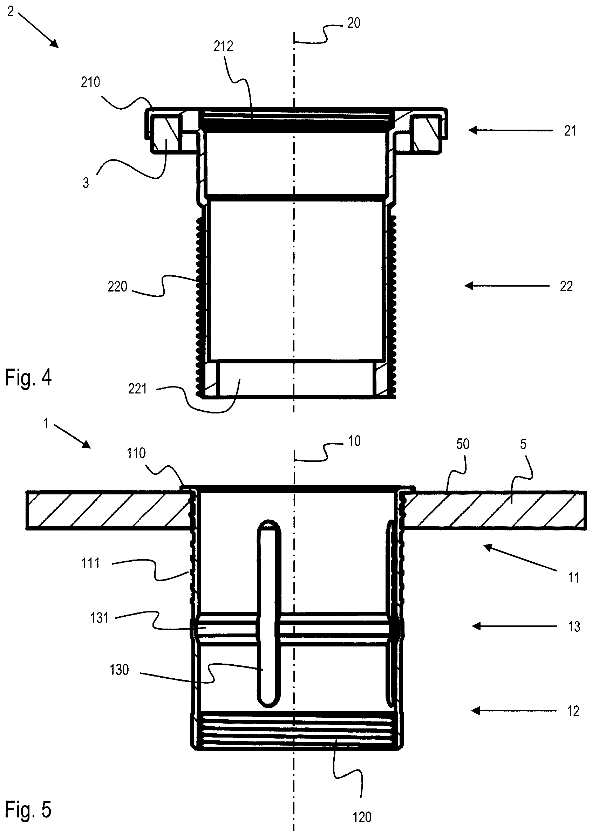

Die Figur 2 zeigt eine perspektivische Ansicht einer Halterung 2 einer erfindungsgemässen Installationsvorrichtung und die Figur 4 zeigt eine seitliche Schnittansicht der Halterung der Figur 2 mit einer darin eingesetzten Dichtung 3.

Die Halterung 2 weist einen hülsenförmigen zylindrischen Körper auf, der sich entlang einer zweiten Längsachse 20 erstreckt. Die Halterung weist ein erstes freies Ende 21 und ein diesem gegenüberliegend angeordnetes, zweites freies Ende 22 auf. Am ersten freien Ende 21 ist ein bezüglich der zweiten Längsachse 20 nach aussen gerichteter Flansch 210 angeordnet. Auf der gegen das zweite Ende 22 gerichteten Seite des Flansches 210 ist eine am Umfang durchgehend umlaufende Nut 211 für eine Dichtung vorgesehen, beispielsweise für eine Flachdichtung. Diese Flanschfläche bildet den Anschlag für den Dübel 1 in der bestimmungsgemässen Gebrauchslage. Zudem bildet sie eine Dichtfläche gegenüber der Wand 5. Am zweiten freien Ende 22 ist ein Gewinde 220 vorgesehen, welches sich entlang der Längsachse 20 von der stirnseitigen Endfläche gegen das erste freie Ende 21 erstreckt. Das Gewinde 220 erstreckt sich etwa über Drei-Viertel des Teiles der Halterung 2, welcher zwischen dem Flansch 210 und der stirnseitigen Endfläche ausgebildet ist. Die stirnseitige Endfläche ist ein Teil eines nach innen, gegen die Längsachse 20 gerichteten Flansches, welcher eine Ausnehmung in der Form eines Sechskantes 221 aufweist.

Die Figur 3 zeigt eine perspektivische Ansicht eines Dübels 1 einer erfindungsgemässen Installationsvorrichtung und Die

Figur 5 zeigt eine seitliche Schnittansicht des Dübels der Figur 3, der in einer Wand 5 eingesetzt ist. Der Dübel 1 weist einen hülsenförmigen zylindrischen Körper auf, der sich entlang einer erste Längsachse 10 erstreckt. Der Dübel 1 weist ein erstes freies Ende 11 und ein diesem gegenüberliegend angeordnetes, zweites freies Ende 12 und ein dazwischenliegender Fixierabschnitt 13 auf. Am ersten freien Ende 11 ist ein bezüglich der ersten Längsachse 10 nach aussen gerichteter Flansch 110 angeordnet. Die stirnseitige Endfläche des Dübels auf der Seite des ersten freien Endes 11 bildet den Anschlag für die Halterung 2. Die gegen das zweite Ende 12 gerichtete Seite des Flansches 110 bildet einen Anschlag gegen die Oberfläche 50 der Wand 5. Anschliessend an de Flansch 110 sind auf der Aussenseite des Dübels 1 Rippen 111 vorgesehen. Dargestellt sind mehrere gleichmässig in der Längsrichtung verteilte Rippen 111. Der mit Rippen versehene Bereich erstreckt sich bis etwa zur Hälfte der an den Flansch 110 anschliessenden Mantelfläche des Dübels 1. Der Aussendurchmesser der Rippen 111 ist kleiner als der Aussendurchmesser des Flansches 110.

Im Fixierabschnitt 13 des Dübels 1 sind Ausnehmungen 130 vorgesehen, welche sich entlang der ersten Längsachse 10 im Wesentlichen über den gesamten Fixierabschnitt 13 erstrecken. Dargestellt sind vier bezüglich des Umfangs gleichmässig verteilte Ausnehmungen 130.

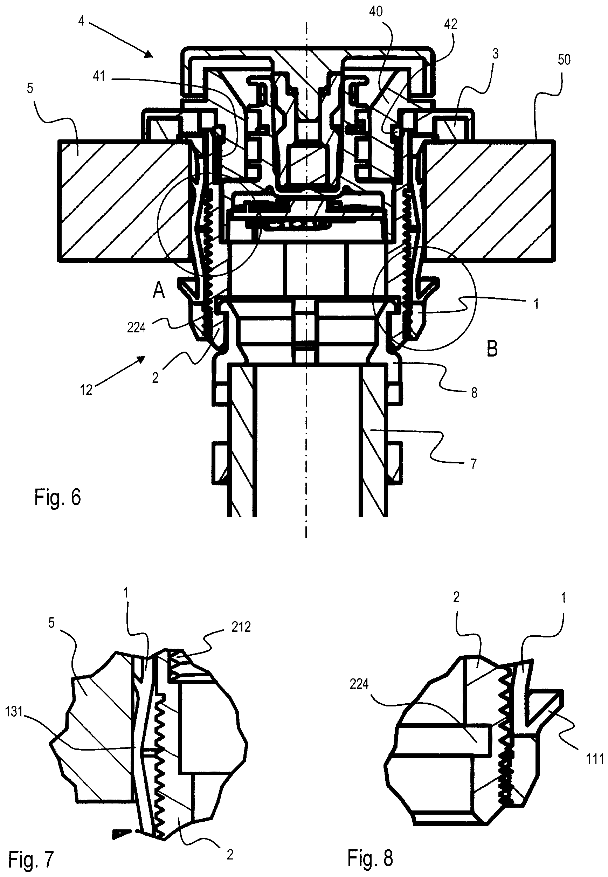

Anschliessend an den gerippten Bereich ist eine Soll-Knickstelle 131 angeordnet. Die Soll-Knickstelle befindet sich etwa in der Mitte des Bereiches des Dübels, der sich zwischen dem Flansch 110 und der stirnseitigen Endfläche des zweiten freien Endes 12 erstreckt. Die Figur 7 zeigt eine Detailansicht der Soll-Knickstelle 131 im zusammengebauten Zustand. Die Soll-Knickstelle 131 weist eine lokale Auswölbung im hülsenförmigen Körper des Dübels 1 auf. Der ausgewölbte Teil, d.h. der Teil, der sich von der ersten Längsachse 10 weg über die Mantelfläche des Hülsenkörpers erstreckt, weist zusätzlich eine Materialausdünnung auf, d.h. die Wandstärke des Dübels 1 in diesem Bereich ist geringer als in den daran anschliessenden Bereichen.

Im Bereich des zweiten freien Endes 12 des Dübels 1 ist auf der Hülseninnenseite, d.h. auf der gegen die Längsachse 10 gerichteten Seite des hülsenförmigen Körpers, ein Gewinde 120 ausgebildet. Das Gewinde 120 erstreckt sich von der stirnseitigen Endfläche in der Richtung der Längsachse 10 bis zu den Ausnehmungen 130 des Fixierabschnittes 13. In der dargestellten Ausführungsform erstreckt sich das Gewinde 120 über fünf Gewindeumgänge in der Richtung der Längsachse 10.

Die Figur 6 zeigt eine seitliche Schnittansicht einer Ausführungsform eines erfindungsgemässen Installationssystems im zusammengebauten Zustand. Der Dübel 1 sitzt konzentrisch in der Bohrung in der Wand 5 und die Halterung 2 sitzt konzentrisch im Dübel 1 und schlägt mit der gegen die Wand 5 gerichteten Flanschfläche an der Wandoberfläche 50 an. Eine Flachdichtung 3 ist in der Flanschnut angeordnet und dichtet zwischen der Wandoberfläche und der Flanschfläche. Die Halterung 2 wurde solange im Dübel 1 gedreht bis sich der Fixierabschnitt 13 mit der Soll-Knickstelle 131 soweit aufgespreizt hat, dass er mit der Innenfläche der Wandbohrung fest im Kontakt ist und der Dübel 1 in der Wandbohrung festklemmt. Wie im Detail der Figur 8 gezeigt, können der Dübel 1 sowie die Halterung 2 an der stirnseitigen Endfläche beim zweiten freien Ende 12, 22 eine Fase aufweisen, welche das Einfahren der jeweiligen Komponente erleichtert. Im Bereich der Fase und dem Innengewinde 120 des Dübels 1 ist der Dübel 1 dicker ausgebildet, um den Bereich zu verstärken. Um den Fixierabschnitt 13 zu schwächen und somit seine Deformation zu begünstigen, ist der Bereich des Fixierabschnittes 13 dünner ausgebildet. Ein Unterputzgerät 4 ist konzentrisch innerhalb der Halterung 2 angeordnet. Das Gerät weist ein Gehäuse 40 mit einem daran angeordneten Gewinde 41 auf, mit welchem es in die Halterung 2 eingeschraubt ist. Ein Dichtelement 42 dichtet die im montierten Zustand aussenliegende Oberfläche des Flansches 210 der Halterung 2 gegenüber dem Innern des Unterputzgerätes 4 und verhindert so das Eindringen von Feuchtigkeit in das Geräteinnere. Auf der innenliegenden Seite des Unterputzgerätes 4 ist ein Kabel 6 angeschlossen, welches im Innern der Halterung 2 bis zum Unterputzgerät 4 geführt ist. Die Halterung 2 weist im Bereich des zweiten freien Endes 12 auf ihrer Innenseite eine umlaufende Nut 224 auf. Die Nut 224 ist derart ausgestaltet, dass ein Verbinder 8 mit einem Rastelement darin einrasten kann. Der Verbinder 8 kann zur Befestigung eines Leerrohres 7 verwendet werden.

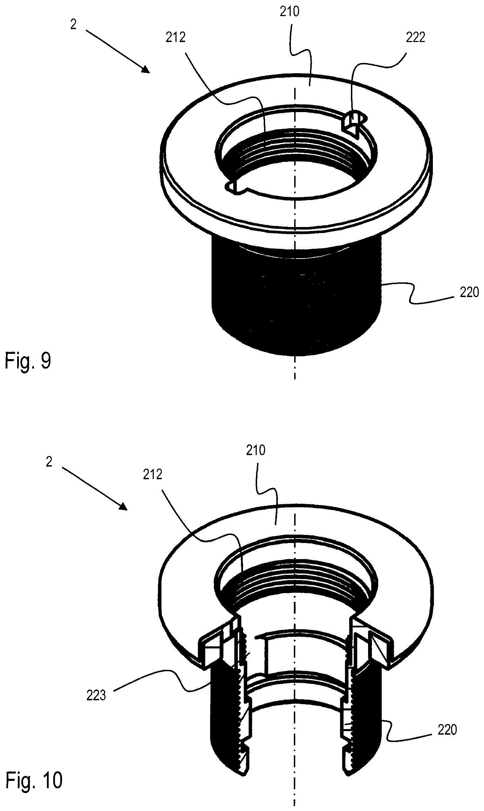

Die Figur 9 zeigt eine perspektivische Ansicht einer weiteren Ausführungsform einer Halterung 2. Die Halterung weist stirnseitige Ausnehmungen 222 auf, in welche ein Werkzeug eingreifen kann, mit welchem die Halterung in den Dübel eindrehbar ist. Dargestellt sind zwei sich bezüglich der Längsachse gegenüberliegende Ausnehmungen.

Die Figur 10 zeigt eine perspektivische Teilschnittansicht einer weiteren Ausführungsform einer Halterung 2. Die Halterung weist einen innenliegenden umlaufenden Absatz auf, der durch darin angeordnete Ausnehmungen 223 unterbrochen ist. In diese Ausnehmungen kann ein entsprechendes Werkzeug eingreifen. Dargestellt sind zwei sich am Umfang gegenüberliegende Ausnehmungen.

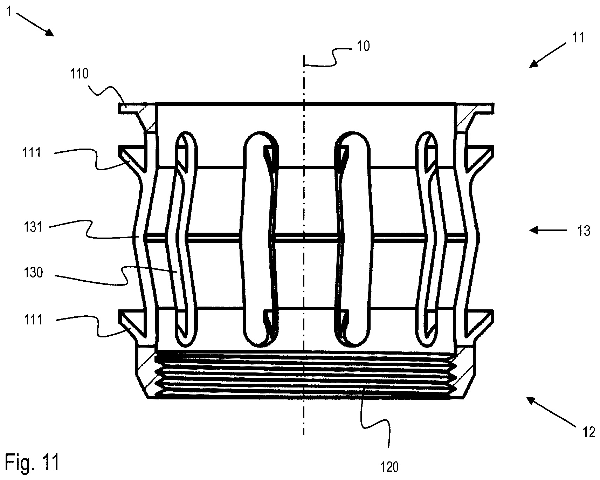

Die Figur 11 zeigt eine seitliche Schnittansicht des Dübels 1 der Figur 6. Im Unterschied zur Ausführungsform des Dübels der Figuren 3 und 5 ist der Flansch 110 zweiteilig ausgebildet. In einen scheibenförmigen ersten Teil, der die Stirnseite des Dübels 1 umfasst und in einen diesen anschliessenden konischen zweiten Teil. Der konische Teil erstreckt sich vom scheibenförmigen Teil bis zu den Ausnehmungen 130 des Fixierabschnittes 13. Beabstandet zu den Enden der Ausnehmungen 130, welche gegen das erste freie Ende 11 gerichtet sind, ist eine erste Rippe 111 am äusseren Umfang des Fixierabschnittes angeordnet. Die Rippe 111 ist kragenförmig und erstreckt sich winklig vom Umfang weg in die Richtung des ersten freien Endes 11. Dargestellt ist ein Winkel von etwa 45 Grad. Der Aussendurchmesser der Rippe 111 ist im Wesentlichen gleichgross wie der Aussendurchmesser des Flansches 110. Anschliessend an die Enden der Ausnehmungen, welche gegen das zweite freie Ende 12 gerichtet sind, ist ein zur ersten Rippe 111 identische zweit Rippe 111 am äusseren Umfang angeordnet. Im Bereich des zweiten freien Endes 12, wo das Gewinde 120 angeordnet ist, weist der Dübel eine dickere Wandstärke auf als im Fixierabschnitt 13. Die Wandstärke des Dübels im Fixierabschnitt ist im Wesentlichen konstant. Die Soll-Knickstelle 131 ist mittig im Fixierabschnitt 13 ausgebildet. Der Aussendurchmesser der Soll-Knickstelle entspricht dem grössten Durchmesser des konischen Teils des Flansches 110. Der Umfang des Dübels im Fixierabschnitt 13 verkleinert sich von der Soll-Knickstelle 131 auf beide Seiten in der Richtung des ersten freien Endes 11 bzw. des zweiten freien Endes 12. Der konische Bereich erstreckt sich über etwa zwei Drittel der Länge der Ausnehmungen 130.

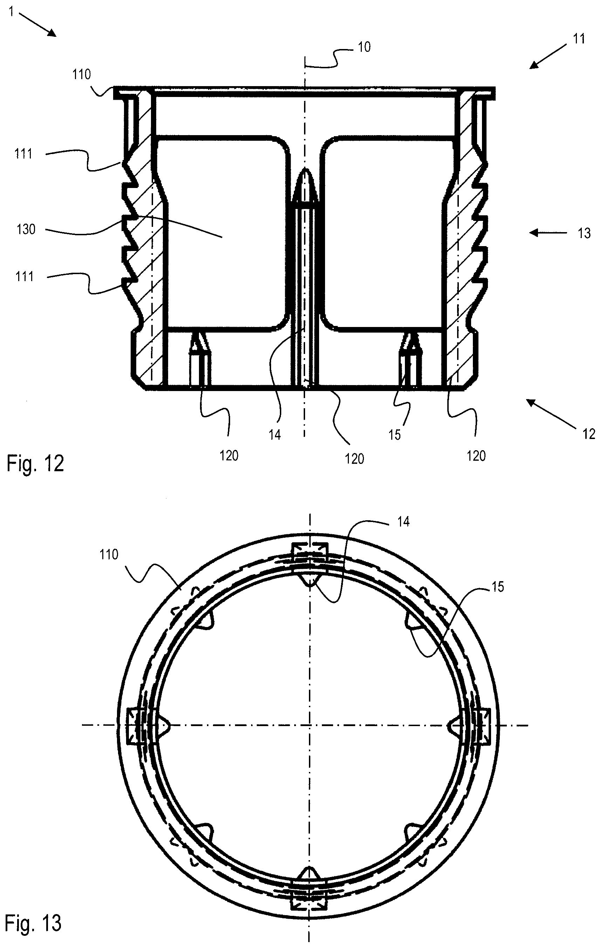

Die Figur 12 zeigt eine seitliche Schnittansicht einer weiteren Ausführungsform eines Dübels 1 und die Figur 13 zeigt eine Draufsicht des Dübels der Figur 12. Gleiche Elemente sind mit gleichen Bezugszeichen gekennzeichnet. Im Unterschied zu den Ausführungsformen der Figuren 3 und 11 sind die Ausnehmungen 130 im Fixierabschnitt 13 breiter ausgestaltet. Dargestellt sind vier breite Ausnehmungen 130, welche im Fixierbereich 13 durch schmale Stege voneinander getrennt sind. Die Breite der Ausnehmungen ist ein Vielfaches der Breite der Stege, beispielsweise das Fünf-, Sechs-, Sieben- oder Achtfache. Am äusseren Umfang des Fixierabschnittes 13 sind mehrere gleichmässig verteilte Rippen 111 angeordnet. Die Rippen 111 sind im pfeilförmig ausgebildet und weisen auf ihren gegen das zweite freie Ende 12 gerichteten Seiten eine flache Flanke auf und weisen auf ihrer gegenüberliegenden Seite eine steile Flanke auf, sodass sie die Wirkung eines Widerhakens erzeugen können. Somit kann der Dübel 1 mit wenig Kraftaufwand in eine Bohrung eingeführt werden. Beim Herausziehen leisten die Rippen 111 jedoch Widerstand und der Dübel kann nur mit grösserem Kraftaufwand wieder aus der Bohrung entfernt werden. Der Dübel ist auf seiner Innenseite mit nach innen gerichteten Rippen 14, 15 ausgestattet, wobei lange Rippen 14 im Bereich der Stege angeordnet sind, welche sich vom zweiten freien Ende 12 bis über die Hälfte der Dübellänge bis annähernd zum ersten Freien Ende 11 erstrecken. Dargestellt sind lange Rippen 14, welche sich über zweidrittel der Dübellänge erstrecken. Zwischen den langen Rippen 14 sind im Bereich des zweiten freien Endes 12 kurze Rippen 15 angeordnet. Dargestellt sind vier kurze Rippen 15, welche zwischen vier langen Rippen 14 gleichmässig verteilt am Umfang angeordnet sind. Die kurzen Rippen 15 erstrecken sich von der Dübel-Stirnseite am zweiten freien Ende 12 bis zu den Ausnehmungen 130. Die langen und kurzen Rippen sind auf ihrer nach innen gerichteten Seite mit einem Gewinde, bzw. mit einem Gewindeabschnitt versehen. Alternativ weisen die Rippen im Neuzustand des Dübels kein Gewinde auf. Das Gewinde wird erst beim Eindrehen der Halterung erzeugt. Hierfür ist das entsprechende Gewinde der Halterung scharfkantig ausgebildet, sodass das Dübelmaterial im Bereich der langen und kurzen Rippen weggeschnitten oder weggedrückt werden kann. Der Innendurchmesser des Gewindes 120 bzw. die lichte Weite zwischen zwei sich am Umfang gegenüberliegenden langen oder kurzen Rippen ist derart gewählt, dass er bzw. sie etwas kleiner ist, als der Aussendurchmesser des Gewindes einer entsprechend einzudrehenden Halterung. Durch diese Ausgestaltung spreizt sich der Dübel 1 schon beim Eindrehen der Halterung und erhöht die Klemmwirkung in der Bohrung. Wird die Halterung weiter eingedreht, so erhöht sich der Widerstand, wenn die Halterung mit dem Gewinde bei den Kurzen Rippen 15 eingreift. Beim Weiterdrehen wird daher das zweite freie Ende 12 bezüglich des ersten freien Endes 11 um die erste Längsachse 10 verdreht. Dadurch wird der Fixierabschnitt 13 gestaucht und die Klemmwirkung erhöht sich weiter. Wird weitergedreht, so hebt sich das Gewinde im Bereich des Fixierabschnitts 13 vom Gewinde der Halterung ab und die Halterung ist nur noch im Bereich des zweiten freien Endes 12 im Eingriff mit dem Dübel. Ein solcher Dübel kann zusammen mit Massivwänden oder Hohlwänden verwendet werden.

**BEZUGSZEICHENLISTE**

| | | | |
|---|---|---|---|
| 1 | Dübel | 22 | zweites freies Ende |
| 10 | erste Längsachse | 220 | Gewinde |
| 11 | erstes freies Ende | 221 | Innensechskant |
| 110 | Flansch | 222 | Ausnehmung |
| 111 | Rippe | 223 | Ausnehmung |
| 12 | zweites freies Ende | 224 | Nut |
| 120 | Gewinde | 3 | Dichtung |
| 13 | Fixierabschnitt | 4 | Gerät |
| 130 | Ausnehmung | 40 | Gehäuse |
| 131 | Soll-Knickstelle | 41 | Gewinde |
| 14 | lange Rippe | 42 | Dichtung |
| 15 | kurze Rippe | 5 | Wand |
| 2 | Halterung | 50 | Oberfläche |
| 20 | zweite Längsachse | 6 | Kabel |
| 21 | erstes freies Ende | 7 | Leerrohr |
| 210 | Flansch | 8 | Verbinder |
| 211 | Nut | | |
| 212 | Gewinde | | |

## Patentansprüche

1. Eine Installationsvorrichtung für den Einbau von Unterputzgeräten (4) an/in einer Wand (5), wobei die Installationsvorrichtung einen Dübel (1) und eine Halterung (2) aufweist, wobei der Dübel (1) einen sich entlang einer ersten Längsachse (10) erstreckenden hülsenförmigen Körper mit einem ersten freien Ende (11), einem diesem gegenüber angeordneten, zweiten freien Ende (12) und einem dazwischenliegenden Fixierabschnitt (13) aufweist, wobei am ersten freien Ende (11) des Dübels (1) ein erster stirnseitiger Anschlag (110) vorgesehen ist und wobei am zweiten freien Ende (12) des Dübels (1) ein erstes Verspannelement (120) vorgesehen ist, und wobei die Halterung (2) einen sich entlang einer zweiten Längsachse (20) erstreckenden hülsenförmigen Körper mit einem ersten freien Ende (21) und einem diesem gegenüber angeordneten, zweiten freien Ende (22) aufweist, wobei am ersten freien Ende (21) ein gegen das zweite freie Ende (22) gerichteter zweiter Anschlag (210) vorgesehen ist und wobei am zweiten freien Ende (22) ein zweites Verspannelement (220) vorgesehen ist, wobei der erste Anschlag (110) und der zweite Anschlag (210) ein Anschlagspaar bilden und wobei das erste Verspannelement (120) und das zweite Verspannelement (220) ein Verspannpaar bilden, **dadurch gekennzeichnet dass** die Halterung (2) in den Dübel eindrehbar ist und dass der Fixierabschnitt (13) derart ausgestaltet ist, dass eine relative Drehbewegung zwischen dem Dübel (1) und der Halterung (2) in einer ersten Drehrichtung zu einer Reduktion des Abstandes zwischen dem ersten freien Ende (11) und dem zweiten freien Ende (12) des Dübels (1) führt und dass eine relative Drehbewegung zwischen dem Dübel (1) und der Halterung (2) in einer zur ersten Drehrichtung entgegengesetzter, zweiten Drehrichtung zu einer Vergrösserung des Abstandes zwischen dem ersten freien Ende (11) und dem zweiten freien Ende (12) des Dübels (1) führt.

2. Die Installationsvorrichtung nach Anspruch 1, wobei der Dübel (1) und/oder die Halterung (2) einen zylindrischen hülsenförmigen Körper aufweisen.

3. Die Installationsvorrichtung nach Anspruch 1 oder 2, wobei die Aussenkontur des zweiten freien Endes (22) der Halterung (2) kleiner ausgebildet ist als die Innenkontur des ersten freien Endes (11) und des Fixierabschnitts (13) des Dübels (1).

4. Die Installationsvorrichtung nach einem der Ansprüche 1 bis 3, wobei der erste Anschlag (110) des Dübels (1) einen bezüglich der ersten Längsachse (10) nach aussen gerichteten Flansch aufweist.

5. Die Installationsvorrichtung nach einem der Ansprüche 1 bis 4, wobei anschliessend an das erste freie Ende (11) des Dübels (1) Rippen (111) angeordnet sind, welche sich entlang der ersten Längsachse (10) und/oder quer zur ersten Längsachse (10) und/oder einer von diesen abweichenden Richtungen erstrecken.

6. Die Installationsvorrichtung nach einem der Ansprüche 1 bis 5, wobei im Fixierabschnitt (13) des Dübels (1) Ausnehmungen (130) vorgesehen sind, welche sich entlang der ersten Längsachse (10) und/oder quer zur ersten Längsachse (10) und/oder einer von diesen abweichenden Richtungen erstrecken und welche am Umfang des Dübels (1) verteilt sind.

7. Die Installationsvorrichtung nach einem der Ansprüche 1 bis 6, wobei im Fixierabschnitt (13) des Dübels (1) mindestens eine Soll-Knickstelle (131) mit einer lokalen Auswölbung und/oder einer lokalen Materialausdünnung und/oder einem anderen Material vorgesehen ist.

8. Die Installationsvorrichtung nach einem der Ansprüche 1 bis 7, wobei der zweite Anschlag (210) der Halterung (2) einen bezüglich der zweiten Längsachse (20) nach aussen gerichteten Flansch aufweist.

9. Die Installationsvorrichtung nach Anspruch 8, wobei im Flansch (210) der Halterung (2), auf seiner gegen das zweite freie Ende (22) gerichteten Seite, eine Nut (211) für eine Dichtung (3) vorgesehen ist.

10. Die Installationsvorrichtung nach einem der Ansprüche 1 bis 7, wobei am ersten freien Ende (21) der Halterung (2) eine Befestigung (212) für ein Unterputzgerät (4) vorgesehen ist.

11. Die Installationsvorrichtung nach einem der Ansprüche 1 bis 10, wobei das Verspannpaar eine Gewindeverbindung oder eine Bajonettverschluss-Verbindung bildet.

12. Die Installationsvorrichtung nach einem der Ansprüche 1 bis 11, wobei am zweiten freien Ende (22) der Halterung (2) ein bezüglich der zweiten Längsachse (20) nach innen gerichteter Flansch mit einem Innensechskant (221) vorgesehen ist.

13. Ein Installationssystem mit einer Installationsvorrichtung nach einem der Ansprüche 1 bis 12 und einem darin angeordneten Unterputzgerät (4).

14. Ein Installationsverfahren einer Vorrichtung nach einem der Ansprüche 1 bis 12 an einer Wand (5) aufweisend die Schritte:
- Einführen des Dübels (1) in eine Ausnehmung in einer Wand (5);
- Einsetzen der Halterung (2) in den Dübel, vor oder nach der Einführung des Dübels (1) in die Ausnehmung in der Wand (5); und
- Ausführen einer relativen Drehbewegung der Halterung (2) bezüglich des Dübels (1), was zu einer Reduktion des Abstandes zwischen dem ersten freien Ende (11) und dem zweiten freien Ende (12) des Dübels (1) führt.

## Claims

1. An installation device for the installation of flush-mounted devices (4) on/in a wall (5), the installation device comprising a dowel (1) and a holder (2), the dowel (1) comprising a sleeve-shaped body extending along a first longitudinal axis (10) and having a first free end (11), a second free end (12) arranged opposite the first free end (11) and a fixing section (13) arranged therebetween, wherein a first stop (110) is provided at the first free end (11) of the dowel (1) and wherein a first clamping element (120) is provided at the second free end (12) of the dowel (1),
and wherein the holder (2) comprises a sleeve-shaped body extending along a second longitudinal axis (20) and having a first free end (21) and a second free end (22) arranged opposite thereto, wherein a second stop (210) directed towards the second free end (22) is provided at the first free end (21) and wherein a second clamping element (220) is provided at the second free end (22), wherein the first stop (110) and the second stop (210) form a pair of stops and wherein the first clamping element (120) and the second clamping element (220) form a clamping pair,
**characterised in that** the holder (2) can be screwed into the dowel (1) and **in that** the fixing section (13) is designed in such a way that a relative rotary movement between the dowel (1) and the holder (2) in a first direction of rotation leads to a reduction in the distance between the first free end (11) and the second free end (12) of the dowel (1) and **in that** a relative rotary movement between the dowel (1) and the holder (2) in a second direction of rotation opposite to the first direction of rotation leads to an increase in the distance between the first free end (11) and the second free end (12) of the dowel (1).

2. The installation device according to claim 1, wherein the dowel (1) and/or the holder (2) comprise a cylindrical sleeve-shaped body.

3. The installation device according to claim 1 or 2, wherein the outer contour of the second free end (22) of the holder (2) is formed smaller than the inner contour of the first free end (11) and the fixing section (13) of the dowel (1).

4. The installation device according to any one of claims 1 to 3, wherein the first stop (110) of the dowel (1) has a flange directed outwards with respect to the first longitudinal axis (10).

5. The installation device according to any one of claims 1 to 4, wherein ribs (111) are arranged adjacent to the first free end (11) of the dowel (1), which ribs extend along the first longitudinal axis (10) and/or transversely to the first longitudinal axis (10) and/or in a direction deviating therefrom.

6. The installation device according to any one of claims 1 to 5, wherein recesses (130) are provided in the fixing section (13) of the dowel (1), which recesses extend along the first longitudinal axis (10) and/or transversely to the first longitudinal axis (10) and/or a direction deviating therefrom and which are distributed around the periphery of the dowel (1).

7. The installation device according to any one of claims 1 to 6, wherein at least one predetermined buckling point (131) with a local bulge and/or a local material thinning and/or another material is provided in the fixing section (13) of the dowel (1).

8. The installation device according to any one of claims 1 to 7, wherein the second stop (210) of the holder (2) comprises a flange directed outwards with respect to the second longitudinal axis (20).

9. The installation device according to claim 8, wherein a groove (211) for a seal (3) is provided in the flange (210) of the holder (2), on its side facing the second free end (22).

10. The installation device according to any one of claims 1 to 7, wherein an attachment (212) for a flush-mounted device (4) is provided at the first free end (21) of the holder (2).

11. The installation device according to any one of claims 1 to 10, wherein the clamping pair forms a threaded connection or a bayonet lock connection.

12. The installation device according to any one of claims 1 to 11, wherein a with respect to the second longitudinal axis (20)inwardly directed flange with an internal hexagon (221) is provided at the second free end (22) of the holder (2) .

13. An installation system comprising an installation device according to any one of claims 1 to 12 and a flush-mounted device (4) arranged therein.

14. A method of installing a device according to any one of claims 1 to 12 on a wall (5) comprising the steps of:
- inserting the dowel (1) into a recess in a wall (5);
- inserting the holder (2) into the dowel, before or after inserting the dowel (1) into the recess in the wall (5); and
- performing a relative rotational movement of the holder (2) with respect to the dowel (1), resulting in a reduction of the distance between the first free end (11) and the second free end (12) of the dowel (1).

## Revendications

1. Dispositif d'installation pour l'installation de dispositifs encastrés (4) sur/dans un mur (5), le dispositif d'installation comprenant une cheville (1) et un support (2), la cheville (1) comprenant un corps en forme de manchon s'étendant le long d'un premier axe longitudinal (10) et ayant une première extrémité libre (11), une deuxième extrémité libre (12) disposée à l'opposé de la première extrémité libre (11) et une section de fixation (13) disposée entre elles, dans laquelle une première butée (110) est prévue à la première extrémité libre (11) de la cheville (1) et dans laquelle un premier élément de serrage (120) est prévu à la deuxième extrémité libre (12) de la cheville (1),
et dans lequel le support (2) comprend un corps en forme de manchon s'étendant le long d'un deuxième axe longitudinal (20) et ayant une première extrémité libre (21) et une deuxième extrémité libre (22) disposée à l'opposé de celle-ci, dans lequel une deuxième butée (210) dirigée vers la deuxième extrémité libre (22) est prévue à la première extrémité libre (21) et dans lequel un deuxième élément de serrage (220) est prévu à la deuxième extrémité libre (22), dans lequel la première butée (110) et la deuxième butée (210) forment une paire de butées et dans lequel le premier élément de serrage (120) et le deuxième élément de serrage (220) forment une paire de serrage,
**caractérisé en ce que** le support (2) peut être vissé dans la cheville (1) et **en ce que** la section de fixation (13) est conçue de telle sorte qu'un mouvement de rotation relatif entre la cheville (1) et le support (2) dans un premier sens de rotation entraîne une réduction de la distance entre la première extrémité libre (11) et la deuxième extrémité libre (12) de la cheville (1) et **en ce qu'**un mouvement de rotation relatif entre la cheville (1) et le support (2) dans un deuxième sens de rotation opposé au premier sens de rotation conduit à une augmentation de la distance entre la première extrémité libre (11) et la deuxième extrémité libre (12) de la cheville (1).

2. Dispositif d'installation selon la revendication 1, dans lequel la cheville (1) et/ou le support (2) comprennent un corps cylindrique en forme de manchon.

3. Dispositif d'installation selon la revendication 1 ou 2, dans lequel le contour extérieur de la deuxième extrémité libre (22) du support (2) est plus petit que le contour intérieur de la première extrémité libre (11) et de la section de fixation (13) de la cheville (1).

4. Dispositif d'installation selon l'une quelconque des revendications 1 à 3, dans lequel la première butée (110) de la cheville (1) présente un rebord dirigé vers l'extérieur par rapport au premier axe longitudinal (10).

5. Dispositif d'installation selon l'une quelconque des revendications 1 à 4, dans lequel des nervures (111) sont disposées au voisinage de la première extrémité libre (11) de la cheville (1), lesquelles nervures s'étendent le long du premier axe longitudinal (10) et/ou transversalement au premier axe longitudinal (10) et/ou dans une direction s'en écartant.

6. Dispositif d'installation selon l'une quelconque des revendications 1 à 5, dans lequel il est prévu dans la section de fixation (13) de la cheville (1) des évidements (130) qui s'étendent le long du premier axe longitudinal (10) et/ou transversalement au premier axe longitudinal (10) et/ou dans une direction qui s'en écarte et qui sont répartis sur la périphérie de la cheville (1).

7. Dispositif d'installation selon l'une quelconque des revendications 1 à 6, dans lequel au moins un point de flambage (131) prédéterminé avec un renflement local et/ou un amincissement local du matériau et/ou un autre matériau est prévu dans la section de fixation (13) de la cheville (1) .

8. Dispositif d'installation selon l'une quelconque des revendications 1 à 7, dans lequel la deuxième butée (210) du support (2) comprend un rebord dirigé vers l'extérieur par rapport au deuxième axe longitudinal (20).

9. Dispositif d'installation selon la revendication 8, dans lequel une rainure (211) pour un joint (3) est prévue dans le rebord (210) du support (2), sur son côté faisant face à la deuxième extrémité libre (22).

10. Dispositif d'installation selon l'une quelconque des revendications 1 à 7, dans lequel une fixation (212) pour un dispositif encastré (4) est prévue à la première extrémité libre (21) du support (2).

11. Dispositif d'installation selon l'une quelconque des revendications 1 à 10, dans lequel la paire de serrage forme un raccord fileté ou un raccord à baïonnette.

12. Dispositif d'installation selon l'une quelconque des revendications 1 à 11, dans lequel une bride dirigée vers l'intérieur par rapport au deuxième axe longitudinal (20) avec un hexagone interne (221) est prévue à la deuxième extrémité libre (22) du support (2).

13. Système d'installation comprenant un dispositif d'installation selon l'une quelconque des revendications 1 à 12 et un dispositif encastré (4) disposé dans celui-ci.

14. Procédé d'installation d'un dispositif selon l'une quelconque des revendications 1 à 12 sur un mur (5) comprenant les étapes consistant à :
- insérer la cheville (1) dans un évidement d'un mur (5) ;
- insérer le support (2) dans la cheville, avant ou après avoir inséré la cheville (1) dans l'évidement de la paroi (5); et
- effectuer un mouvement de rotation relatif du support (2) par rapport à la cheville (1), résultant en une réduction de la distance entre la première extrémité libre (11) et la deuxième extrémité libre (12) de la cheville (1).
